# EUROPÄISCHE PATENTANMELDUNG

(11) **EP 3 581 835 A1**
(43) Veröffentlichungstag der Anmeldung: **18.12.2019**
(21) Anmeldenummer: 19177912.3
(22) Anmeldetag: 03.06.2019
(51) Int. Cl.: F16L 11/15, F16L 11/11, F16L 11/12, F24F 13/02, E04F 17/04, H02G 3/04

(54) **LUFTVERTEILUNGSSYSTEM MIT KANALROHR**

(30) Priorität: 14.06.2018 DE 102018114219
(71) Anmelder: Pluggit GmbH, 81829 München (DE)
(72) Erfinder: Bolsmann, Christian, 85560 Ebersberg (DE)
(74) Vertreter: Keil & Schaafhausen Patent- und Rechtsanwälte PartGmbB

(57) **Zusammenfassung**

Die Erfindung bezieht sich auf ein Luftverteilungssystem mit wenigstens einem Kanalrohr zum Transportieren von Luft und dgl. Medien, insbesondere für die Anwendung in Heizungs-, Lüftungs- und Klimatisierungsanlagen, bzw. als Elektroinstallationsrohr. Das Kanalrohr kann dabei eine Innenhöhe (Hi) zwischen etwa 25 und 70 mm und einer Innenbreite (Bᵢ) zwischen etwa 50 bis 180 mm und mit einer im Wesentlichen sinuswellenförmigen Wandung (W) einer Wellenhöhe (H_{w}) zwischen etwa 3 und 15 mm und einer Wellenlänge (L_{w}) zwischen etwa 4 und 25 mm aufweisen. Um Staubablagerungen zu minimieren weist das Kanalrohr (1) eine Oberflächenrauheit R_{z} von unter 25 µm auf.

## Beschreibung

Die Erfindung betrifft ein Luftverteilungssystem mit wenigstens einem Kanalrohr zum Transportieren von Luft und dgl. Medien, insbesondere für die Anwendung in Heizungs-, Lüftungs- und Klimatisierungsanlagen, bzw. als Elektroinstallationsrohr.

Der Einsatz herkömmlicher Kanalrohre dieser Art scheitert häufig an dem Platzbedarf und/oder sie sind bei nicht-gerader Verlegung schwer ohne Druckverluste für das in ihnen strömende Medium zu montieren, wenig widerstandsfähig oder von hohem Gewicht und unter Umständen schwierig zu reinigen.

Aus der EP 1 346 173 B1 ist ein Kanalrohr für ein Luftverteilungssystem der eingangs genannten Art bekannt, bei dem eine Innenhöhe zwischen etwa 30 und 80 mm und eine Innenbreite zwischen etwa 70 und 150 mm aufweist, wobei vorzugsweise die Innenhöhe nicht größer als etwa die Hälfte der Innenbreite ist, und dass die Wandung im Wesentlichen sinuswellenförmig mit einer Wellenhöhe zwischen etwa 4 und 10 mm und einer Wellenlänge zwischen etwa 5 und 20 mm ausgebildet ist.

Stahllüftungsrohre mit handelsüblicher Verzinkung haben im Neuzustand bereits eine Rauheit R_{z} von 100 µm bis etwa 160 µm, welche mit der Zeit durch Korrosion kontinuierlich zunimmt. Dies führt zu Problemen durch Ablagerung von Staub, was auch hygienische Probleme verursachen kann.

Ausgehend von diesem bekannten Kanalrohr ist es eine Aufgabe der vorliegenden Erfindung, ein Luftverteilungssystem vorzuschlagen, welches hinsichtlich der Schalemissionen und des Staubablagerungsverhaltens weiter verbessert ist. Weiter soll das Luftverteilungssystem verhältnismäßig flach ausgebildet sein können, dennoch flexibel auch in Krümmungen ohne störenden Druckverlust des in ihm strömenden Mediums verlegt werden können und bei geringem Gewicht hohe Robustheit aufweisen.

Diese Aufgabe wird bei einem Luftverteilungssystem der eingangs genannten Art erfindungsgemäß im Wesentlichen mit den Merkmalen des Anspruchs 1 gelöst.

Der Erfindung liegt dabei der Gedanke zu Grunde, dass die Glattheit der Oberfläche ein wesentliches Kriterium für das Staubablagerungsverhalten in Lüftungskanälen ist. Je glatter die Oberfläche, desto weniger Staub kann sich ablagern. Bei dem erfindungsgemäßen Luftverteilungssystem haben die Kanalrohre vorzugsweise eine geschlossenporige Oberfläche und sind insbesondere technisch glatt. Messungen und Versuche haben ergeben, dass aufgrund seiner besonderen molekularen Struktur bei der Verwendung von Kanalrohren aus einem Polypropylen-Copolymer, beispielsweise mit einer Dichte zwischen etwa 0,8 bis 1,3 g/m³, diese eine Oberflächenrauheit R_{z} von unter 25 µm, insbesondere zwischen etwa 10 µm bis 20 µm, insbesondere unter 15 µm, aufweisen kann. Damit besitzt das Luftverteilungssystem eine äußerst hohe Glattwandigkeit und folglich eine hohe Reinigungsfähigkeit. Seine hygienische und physiologische Unbedenklichkeit qualifiziert es zu einem optimalen Werkstoff für z.B. Trinkwasser- und Lüftungsrohre bzw. alle anderen Einsatzgebiete, die lebensmittelrechtlichen Bestimmungen unterliegen.

Die erfindungsgemäß vorgesehene gewellte Profilform der Kanalrohre garantiert eine hohe Verlege-Flexibilität bei gleichzeitig hoher Stabilität und Trittfestigkeit. Außerdem wirkt der Kanal aufgrund seines Profils praktisch wie ein Schalldämpfer.

Dabei liegt die Wandstärke vorzugsweise zwischen etwa 0,2 und 2 mm, so dass das Kanalrohr gefahrlos transportierbar, in den Boden einlassbar und dort sogar begehbar ist.

Die nach außen weisenden Wellen der Wandung sind bei einer besonderen Ausgestaltung der Erfindung im Wesentlichen von halbrunder Form, um die notwendige Flexibilität zu gewährleisten.

Die nach innen weisenden Wellen haben dagegen vorzugsweise eine glatte Innenfläche im Bereich eines nach außen weisenden als Verstärkung des Wandmaterials ausgebildeten Zwischenbuckels, so dass bei ausreichender Stabilität eine gute Reinigungsmöglichkeit gewährleistet ist.

Um thermischen Beanspruchungen bei Formstabilität hinreichend standhalten zu können, sollte das Wandmaterial einen Schmelzindex zwischen etwa 130 und 200°C aufweisen.

Ein weiterer Vorteil wird dann erzielt, wenn das Wandmaterial ein vorzugsweise lebensmittelverpackungsechtes Flammschutzmittel enthält. Je nach prozentualem Anteil des Flammschutzmittels können auf diese Weise die Anforderungen an bestimmte Brandschutzvorschriften oder -normen erfüllt werden.

Der Querschnitt des erfundenen Kanalrohrs kann flach-eckig aber auch flachoval sein. Im letzteren Fall sollten die geraden Wandbereiche nicht größer sein als der Durchmesser der halbzylinderförmige Wandbereiche.

Es wird besonders bevorzugt, wenn in dem Luftverteilungssystem getrennte Verteilungskanäle mit jeweils wenigstens einem Kanalrohr zu jedem zu belüftenden Raum für eine Verteilung der Luft zu den Räumen in Durchflüssen vorgesehen sind, welche entsprechend an jeden Raum angepasst sind, wobei die Verteilungskanäle mit einem oder mehreren Luftverteilungsstellen mit Mitteln, welche für das individuelle Einstellen des Durchflusses der Luft zu jedem einzelnen Verteilungskanal anwendbar sind, verbunden sind, wobei die Rohrleitungen der Verteilungskanäle eine flexible Hülle aufweisen, welche eine nicht geradlinige Verlegung in einem System von Balken und Wänden ermöglicht und wobei Einlassmittel, durch die die Luft in die einzelnen Räume eintritt einen Druckabfall aufweisen, welcher im Vergleich zum inhärenten Druckabfall in den Kanälen aufgrund von Reibungsverlusten gering ist, und dass das Mittel für das individuelle Einstellen des Durchflusses der Luft wenigstens ein Drosselmittel aufweist.

Durch die Anordnung von Verteilungskanälen in verschiedenen Räumen, welche mit einem flexiblen Gehäuse ausgestattet sind, und um diese Kanäle mit einer oder mehreren Luftverteilungsstellen zu verbinden, welche Vorrichtungen für das individuelle Einstellen des Durchflusses der Luft in jeden einzelnen Verteilungskanal aufweisen, und da diese Kanäle mit einem Druckabfall, welcher im Vergleich zum Druckabfall, der durch Reibung in den Kanälen hervorgerufen wird, klein ist, in den Raum münden, eine Anpassung und Einstellung der Durchflussmenge in jeden Raum für jeden der Verteilungskanäle stattfindet, was bedeutet, dass der Verteilungskanal ohne eine Drosselung in dem Raum münden kann, d.h. dass der gesamte Druckabfall in den Kanal (den Kanälen) und nicht in den Einlassmitteln oder in den Ventilen stattfindet, welche mit dem Raum verbunden sind. Hiermit können Kanäle unterschiedlicher Größe und/oder Anzahl von der Verteilungsstelle in jeden Raum angeordnet werden. Dies kann bereits bei der Installation des Systems gemäß der Erfindung mit dem Wissen bezüglich der benötigten Luftmenge stattfinden, um eine zufriedenstellende Ventilation/Luftaustausch für jeden Raum zu erhalten, wenn dies zuvor bekannt ist. Die Anzahl von Verteilungskanälen ist ebenso bekannt wie die Länge jedes einzelnen Verteilungskanals, welcher in der Vorrichtung enthalten ist, was bedeutet, dass der Druckabfall in jedem Verteilungskanal durch den notwendigen Durchfluss zu jedem Raum berechnet ist. Durch die Möglichkeit der schrittweisen Drosselung des Durchflusses an den Verteilungsstellen auf jedem Stockwerk und durch die Verwendung von Drosselmitteln ist eine vollständige Lösung bezüglich der Anzahl an Verteilungskanälen zu jedem Raum in Anbetracht der Länge von jedem Verteilungskanal möglich, wie beispielsweise wie folgt dargelegt: "1,8 Verteilungskanäle zum Badezimmer/Waschraum auf dem zweiten Stockwerk", was bedeutet, dass ein vollständig geöffneter Verteilungskanal plus eines 20%igen gedrosselten Verteilungskanals kann für diesen Raum verwendet werden. Diese Berechnung und ebenso diese Installationsanweisungen können mit der Lieferung des Ventilationssystems ausgegeben werden. Das bedeutet, dass ebenso Nicht-Fachleute die Vorrichtung installieren können. Gemäß der einfachsten Anwendung der Erfindung muss keine Veränderung oder Einstellung des Durchflusses der Luft nach der Installation vorgenommen werden. Die erfindungsgemäß geringe Oberflächenrauheit trägt zu einem geringen Druckverlust bei.

Weitere Ziele, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: ein die Erfindung aufweisendes Kanalrohr in Seitenansicht,
- Fig. 2: das Kanalrohr gemäß Fig. 1 in stirnseitiger Ansicht,
- Fig. 3: das Kanalrohr von Fig. 1 in Draufsicht,
- Fig. 4: eine stirnseitige Ansicht des Kanalrohrs von Fig. 3, und
- Fig. 5: die Einzelheit X aus Fig. 3 im Schnitt gesehen.

Das in den Figuren dargestellte Kanalrohr 1 dient z.B. dem Transportieren von Luft und dgl. Medien, insbesondere für die Anwendung in Heizungs-, Lüftungs- und Klimatisierungsanlagen, oder als Elektroinstallationsrohr. Die Innenhöhe Hᵢ des Kanalrohres 1 liegt zwischen etwa 25 und 70 mm, seine Innenbreite Bᵢ zwischen etwa 50 bis 180 mm. Für eine bevorzugte flache Ausgestaltung ist dann gesorgt, wenn die Innenhöhe Hᵢ nicht größer als etwa die Hälfte der Innenbreite Bᵢ ist. Das Kanalrohr 1 hat eine Oberflächenrauheit R_{z} von unter 25 µm, vorzugsweise unter 15µm, z.B. etwa 14 µm.

Das Kanalrohr 1 hat eine im Wesentlichen sinuswellenförmig gestaltete Wandung W mit einer Wellenhöhe H_{w} zwischen etwa 3 und 15 mm und einer Wellenlänge L_{w} zwischen etwa 4 und 25 mm. Die Wandstärke S_{w} liegt zwischen etwa 0,2 und 2 mm, woraus sich die Außenbreite Bₐ und die Außenhöhe Hₐ ergibt.

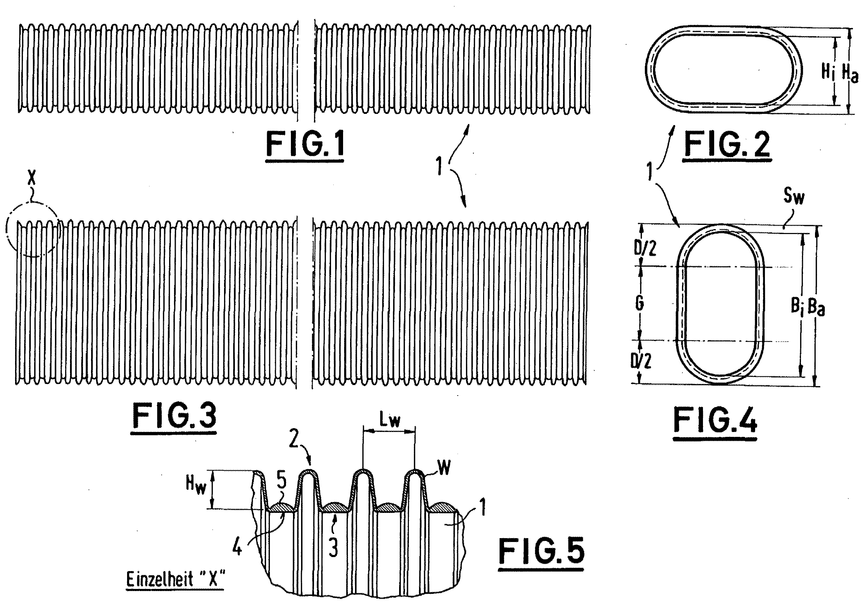

Wie sich aus der zeichnerischen Darstellung insbesondere von Fig. 3 ergibt, haben die nach außen weisenden Wellen 2 der Wandung W im Wesentlichen halbrunde Form. Die nach innen weisenden Wellen 3 sind dagegen mit einer glatten Innenfläche 4 im Bereich eines nach außen weisenden Zwischenbuckels 5 ausgestattet. Die Zwischenbuckel 5 sind durch eine bereichsweise Vergrößerung der Wandstärke S_{w} auf bis zum 3- oder 4-fachem der sonstigen Wandstärke S_{w} gebildet. Die äußere Oberfläche der Buckel 5 ist konvex gekrümmt.

Das Wandmaterial des Kanalrohres 1 kann ein vorzugsweise lebensmittelverpackungsechter Kunststoff, insbesondere ein Polypropylen-Copolymer oder Polyethylen mit einer Dichte zwischen 0,8 bis 1,3 g/m³ sein, wobei aus Gründen der Temperaturwiderstandsfähigkeit ein Schmelzindex zwischen etwa 130 und 200°C eingehalten werden sollte. Das Wandmaterial kann ferner ein ebenfalls vorzugsweise lebensmittelver-packungsgeeignetes Flammschutzmittel enthalten, das in seiner Menge an verschiedene Brandschutzforderungen angepasst werden kann.

Wie sich insbesondere aus den Fig. 2 und 4 ergibt, hat das dargestellte Kanalrohr 1 bei dieser Ausführungsform einen flach-ovalen Querschnitt, wobei der gerade Wandungsbereich G nicht nennenswert kleiner sein sollte als der Durchmesser der halbzylinderförmigen Wandbereiche.

### Bezugszeichenliste:

- 1: Kanalrohr
- 2: nach außen weisende Welle
- 3: nach innen weisende Welle
- 4: Innenfläche
- 5: Zwischenbuckel

- Bᵢ: Innenbreite
- Bₐ: Außenbreite
- D: Durchmesser
- G: gerader Wandabschnitt
- Hₐ: Außenhöhe
- Hᵢ: Innenhöhe
- H_{w}: Wellenhöhe
- S_{w}: Wandstärke
- W: Wandung

## Patentansprüche

1. Luftverteilungssystem mit wenigstens einem Kanalrohr zum Transportieren von Luft und dgl. Medien, insbesondere für die Anwendung in Heizungs-, Lüftungs- und Klimatisierungsanlagen, bzw. als Elektroinstallationsrohr, mit einer Innenhöhe (Hᵢ) zwischen etwa 25 und 70 mm und einer Innenbreite (Bᵢ) zwischen etwa 50 bis 180 mm und mit einer im Wesentlichen sinuswellenförmigen Wandung (W) einer Wellenhöhe (H_{w}) zwischen etwa 3 und 15 mm und einer Wellenlänge (L_{w}) zwischen etwa 4 und 25 mm, **dadurch gekennzeichnet, dass** das Kanalrohr (1) eine Oberflächenrauheit R_{z} von unter 25 µm aufweist.

2. Luftverteilungssystem nach Anspruch 1, **dadurch gekennzeichnet, dass** das Kanalrohr (1) eine Oberflächenrauheit R_{z} von 10 µm bis 20 µm, insbesondere unter 15 µm, aufweist.

3. Luftverteilungssystem nach Anspruch 1 oder 2, **dadurch gekennzeichnet, dass** das Kanalrohr (1) zumindest auf der Innenseite eine geschlossenporige Oberfläche aufweist.

4. Luftverteilungssystem nach einem der vorhergehenden Ansprüche, **dadurch gekennzeichnet, dass** die Wandung (W) des Kanalrohrs (1) nach außen weisenden Wellen (2) in Halbrundform aufweisen, wobei die Wandstärke (S_{w}) zwischen etwa 0,2 mm und etwa 2 mm beträgt.

5. Luftverteilungssystem nach einem der vorhergehenden Ansprüche, **dadurch gekennzeichnet, dass** die nach innen weisenden Wellen (3) des Kanalrohrs (1) eine glatte Innenfläche (4) im Bereich eines nach außen weisenden von einer Verstärkung des Wandmaterials ausgebildeten Zwischenbuckels (5) haben.

6. Luftverteilungssystem nach einem der vorhergehenden Ansprüche, **dadurch gekennzeichnet, dass** das Wandmaterial des Kanalrohrs (1) ein trinkwassergeeignetes Polypropylen-Copolymer ist, das optional ein vorzugsweise lebensmittelverpackungsgeeignetes Flammschutzmittel enthält.

7. Luftverteilungssystem nach einem der vorhergehenden Ansprüche, **dadurch gekennzeichnet, dass** das Wandmaterial des Kanalrohrs (1) einen Schmelzindex zwischen 130°C und 200°C aufweist.

8. Luftverteilungssystem nach einem der vorhergehenden Ansprüche, **dadurch gekennzeichnet, dass** das Profil des Kanalrohrs (1) derart gewählt ist, dass es schalldämpfend wirkt.

9. Luftverteilungssystem nach einem der vorhergehenden Ansprüche, **dadurch gekennzeichnet, dass** das Kanalrohr (1) einen flach-ovalen Querschnitt aufweist, wobei die geraden Wandungsbereiche (G) ihrer Länge nach etwa dem Durchmesser (D) der halbzylinderförmigen Wandbereiche entsprechen, und/oder dass die Innenhöhe (Hi) des Kanalrohrs (1) nicht größer als etwa die Hälfte der Innenbreite (Bᵢ) des Kanalrohrs (1) ist.

10. Luftverteilungssystem nach einem der vorhergehenden Ansprüche, **dadurch gekennzeichnet, dass** getrennte Verteilungskanäle mit jeweils wenigstens einem Kanalrohr (1) zu jedem zu belüftenden Raum für eine Verteilung der Luft zu den Räumen in Durchflüssen vorgesehen sind, welche entsprechend an jeden Raum angepasst sind, wobei die Verteilungskanäle mit einem oder mehreren Luftverteilungsstellen mit Mitteln, welche für das individuelle Einstellen des Durchflusses der Luft zu jedem einzelnen Verteilungskanal anwendbar sind, verbunden sind, wobei die Rohrleitungen (1) der Verteilungskanäle eine flexible Hülle aufweisen, welche eine nicht geradlinige Verlegung in einem System von Balken und Wänden ermöglicht und wobei Einlassmittel, durch die die Luft in die einzelnen Räume eintritt einen Druckabfall aufweisen, welcher im Vergleich zum inhärenten Druckabfall in den Kanälen aufgrund von Reibungsverlusten gering ist, und dass das Mittel für das individuelle Einstellen des Durchflusses der Luft wenigstens ein Drosselmittel aufweist.
